# EUROPEAN PATENT APPLICATION

(11) **EP 1 796 393 A1**
(43) Date of publication of application: **13.06.2007**
(21) Application number: 05077816.6
(22) Date of filing: 09.12.2005
(51) Int. Cl.: H04N 7/24

(54) **Method and system for automatic IP TV program generation**

(71) Applicant: Koninklijke KPN N.V., 2516 CK The Hague (NL)
(72) Inventor: Van Steenbergen, Ate Sander, 9737 NN Groningen (NL)
(74) Representative: Wuyts, Koenraad Maria

(57) **Abstract**

According to this invention content can be uploaded by an upload device (1) to a content distribution system (10) after which the content is broadcast automatically to a content receiving device (5). Information additional to the uploaded content can be used to determine via which broadcast channel the content should be broadcasted. The additional information is analyzed by the control unit (15) that is comprised by the content distribution system (10). The content distribution system (10) also may comprise an encoding unit (12) that can be used for the automatically conversion between different encoding formats of the uploaded content and the content to be distributed.

## Description

### FIELD OF THE INVENTION

This invention relates to a method and system for the uploading and the distribution of video and audio content.

### BACKGROUND OF THE INVENTION

The viewing of video content in an IP based environment has become increasingly popular. Video content is accessible nowadays in many different ways. One way for making video content available to the public is by means of IP television. In case of IP television, television programs and other video content is made available for the public for instance via the principle of broadcasting, multicasting, uni-cast or video on-demand.

In relation to video content there are known methods and systems that enable individuals to provide, for instance by uploading, video content to a content provider. An example of this is the Video Upload Program provided by Google (https://upload.video.google.com/). The Video Upload Program enables individuals (Internet users) to upload a self-produced digital video file after which the digital video file is included in the Google video environment. Internet users are thereupon able to download the digital video file from this environment.

### PROBLEM DEFINITION

A disadvantage of the prior art is that it takes several processing steps before previously uploaded video content is made available for the public. After video content is uploaded and received at a central location, the video content should be placed in the video environment that is accessible to Internet users. This requires for instance the editor of the video environment to decide whether or not the received video content actually should be placed into the video environment. It may be possible that only specific extracts from the video content are placed within this environment. In this case, it is required to review the video content and to decide which parts can be made available in the video environment. Availability to the public is in the prior art a passive availability, i.e. users are required to actively access the video environment in order to see which content can be downloaded. Further, users need to select specific content that they want to view. A disadvantage of this concept is that users, intending to view video content, need first to search or select the specific video content contained in the video environment. Thus, also from the receiving user several steps are required before video content is actually received by that user.

As a consequence, both the video content distributor and the user that wants to view video content that is produced and uploaded by other users are required to perform a number of steps before the video content may be actually viewed. This is a problem since this can refrain users from viewing video content that is produced and uploaded by other users. A result of this may also be that users are less eager to produce and upload video content if they know that the target audience may find it to complex to get access to the uploaded video content (or that the target audience is not aware that specific video content is available).

### AIM OF THE INVENTION

It is an object of the invention to eliminate the drawbacks of the prior art and to provide a system and a method for automatically uploading and broadcasting of video and audio content.

### SUMMARY OF THE INVENTION

According to the present invention it is possible to make video content that is produced and uploaded by a user automatically accessible to other users. A possible way to make video content accessible is by using the principle of broadcasting. An advantage of the method and the system according to the present invention is that neither the content provider nor the user that wants to view the video content are required to perform the additional steps of the prior art. When video content is uploaded by a user, this video content will be automatically encoded into a video format that is suitable for being broadcast. Thereupon the encoded video content will automatically be broadcast via a broadcast channel. Although in the latter is referred to video content, the present invention does also include receiving and distributing of audio content. Further, it is remarked that content that is referred to as video content may in fact comprise a combination of video content and audio content.

Generally, there are several broadcast channels available to the users. The only step to be performed by the receiving user is to select the appropriate channel in order to receive the (a selected category of) video content produced by other users. The process of channel determination for the uploaded content to be distributed can be automated by making use of an algorithm that determines a specific channel based on information that is associated to the uploaded video content. This determination process is not limited to the selection of channels; also other so-called distribution parameters may be determined, such as the instance of time that content is to be broadcast. An advantage of the present invention is that the content provider or content distributor is not required to perform an active step in the process of distributing received content since the video content is encoded and broadcasted automatically. However, in the present invention the content distributor is able to provide the algorithm with parameters by which it is possible to contribute to the control the distribution process. These parameters may also be provided to the algorithm by other parties such as content providers, telecom providers or end-users. Parameters may for instance be provided to the algorithm by entering these parameters via a remote terminal that is connected via a communications network to a system at which the algorithm is implemented.

According to the present invention it is not only possible to broadcast user-produced video content automatically, but also with almost no delay. Because the steps performed after receiving the uploaded video content are automated, it is possible to broadcast the video content almost immediately (e.g. in case there is a free channel to broadcast, and/or stop the current broadcast and start the broadcast of the new uploaded content). An advantage of this is that the broadcast video content can be extremely up-to-the-minute (although encoding time should be taken into account). It may therefore be possible for users to produce and upload video content in response to each others video content very quickly. The present invention is not limited to video content. Also audio content and content that comprises both video and audio are within the scope of the present invention.

### BRIEF DESCRIPTION OF THE DRAWING FIGURE

The foregoing aspects and many of the attendant advantages of this invention will be explained by reference to the following detailed description, when taken in conjunction with the accompanying drawing, wherein:
FIG. 1 is a block diagram illustrating an architecture of an embodiment of the invention.
FIG. 2 depicts a flow chart illustrating the information exchange between the upload device, the content distribution system, and the content receiving device.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

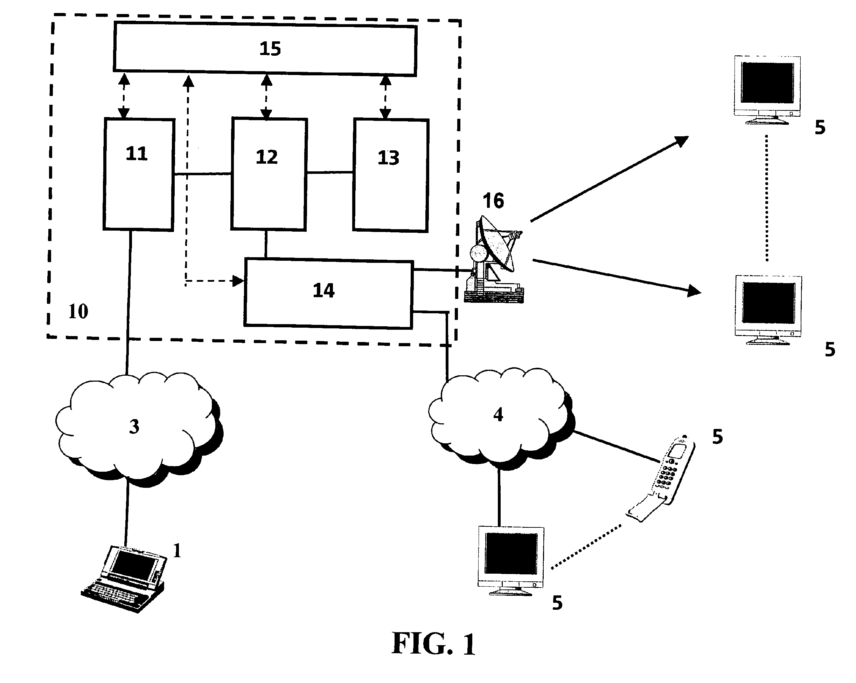

In FIG. 1 an architecture according the invention is depicted, in which a content upload device (1) can be used for uploading content, such as video content and audio content, to a content distribution system (10). The content upload device (1) is for instance a personal computer system that can be connected to a content production device (not depicted in FIG. 1), such as a digital camera. Uploading of content can take place in many different ways. In general, uploading indicates that information (content, files, etc.) is sent from one device to another device. Often the process of sending information is referred to as uploading or downloading dependant on the types of devices between which the information is sent. For instance, sending a file from a personal computer to a central server connected to the Internet is referred to as uploading. When a file is sent from a central server to a personal computer it is often referred to as downloading.

It is also possible that a content production device is integrated in the content upload device (1). For instance, there might be a camera integrated in a personal computer system, or in a handheld communication device. It is also possible that content is produced by using other existing content, such as content residing in files with an MPEG2 format. The content upload device (1) may have means for composing content out of content from different sources such as a digital camera and MPEG2 files. It is also possible that the content upload device (1) is part of a production environment such as a film studio. Content may also be stored temporarily before it is uploaded, for instance in a storage means of the content upload device (1).

The content can be uploaded from the content upload device (1) to the content distribution system (10) via a communication network (3). The communication network (3) can be any type of network for data, telephony or multi-media purposes. For instance, the communication network (3) can be a fixed network, a mobile network, a private network or a public network. In the embodiment shown in FIG. 1, the communication network (3) is an IP based network, although, alternatively of additionally, also other communication protocols might be supported by the communication network (3).

The content distribution system (10) can for instance be operated by a content provider, a broadcasting station (TV or radio) or an Internet Service Provider (ISP). The content distribution system (10) may comprise a content receiving unit (11) for receiving content via communication network (3). The content receiving unit (11) may comprise one or more communication protocol stacks that enable a proper communication path to be established between the uploading device (1) and the content distribution system (10). The content receiving unit (11) may also comprise functionality for identifying possible additional information that is added to the content by the uploading device (1). This additional information may for instance describe the type of the content or may identify a channel via which the content is supposed to be distributed. When the content receiving unit (11) has identified such additional information, the additional information may for instance be sent to a control unit (15) that is comprised by the content distribution system (10). The control unit (15) may perform several coordinating tasks in relation to the other units comprised by the content distribution system (10). If the encoding format of the received content differs from the encoding format of content that is to be distributed, it is required to perform a conversion. This conversion may take place at a content encoding unit (12). For instance, a received video content may be in an MPEG2 format while the distributed format is the Windows Media Format (WMF) format. It may also be possible that the communications protocol via which the uploaded content is transported to the content distribution system (10) differs from the communications protocol via which the content to be distributed is to be transported. The distribution system (10) may have facilities for automatically converting between both communication protocols. Further, there may also be a difference between the bandwidth bitrate of the uploaded content and the bandwidth bitrate of the content to be broadcast or distributed. There may also be a difference between the encoding bitrate of the uploaded content and the encoding bitrate of the content to be broadcast or distributed. The distribution system (10) may have facilities for the automatically conversion between both bandwidth bitrates and/or between both encoding bitrates. Additionally, also a conversion of the aspect ration may be needed in the case that the received video content and the distributed video content do not have similar aspect ratios. For example, the aspect ratio of the video images comprised by the uploaded video content may be 4:3 (normal television), while the aspect ratio of the video content to be distributed is 2,35:1 (wide-screen television). However, it may also be possible that the encoding format of the received content equals the encoding format of the distributed content in which case conversion by the content encoding unit (12) is not required. Further, it may also be the case that the content to be distributed is encrypted before it is distributed. This is for example often the case with pay-tv. Received content should then be decrypted before it can be viewed a user.

The control unit (15) controls the units comprised by the content distribution system (10) according to an algorithm that is implemented by means of a software code residing at a memory means comprised by the control unit (15). A possible task of the control unit (15) is to recognize if the encoding format of the received content equals the encoding format of the content to be broadcast and to activate, if this is not the case, the content encoding unit (12). Another possible task of the control unit (15) is to determine if the received content, either encoded or not encoded, should be stored in a content storage means (13). For instance, it is at a certain moment not possible to distribute the received content because at that moment other content is already being distributed. It is also possible that the priority of the received content is low compared to the priority of other received content so that the content first has to be stored in the content storage means (13) until other content is distributed. Further, it is possible that several received content instances are stored in the content storage means (13). Content instances that are stored may be deleted without being broadcast.

A broadcast interface unit (14) receives content from the content encoding unit and determines on basis of the additional information received together with the received content via which channel the content is to be distributed. The control unit (15) may for instance send instructions to the content storage means (13) that specific content residing in the content storage means (13) should be broadcasted starting at a certain moment in time. Upon such an instruction the content storage means (13) supplies the content to the broadcast unit (14), either directly or via the content encoding unit (12). In addition, the broadcast unit (14) receives from the control unit (15) additional information that was received previously together with the received content. Based on this additional information the broadcast unit (14) determines via which channel the content is to be broadcast. However, it may also be the case that the control unit (15) already determines via which channel the broadcasting should take place and that the channel selection is sent by the control unit (15) to the broadcast unit (14). Thus an algorithm may, in addition to the control unit (15), also reside in the broadcast unit (14).

The system according to the present invention may have multiple channels, e.g. a children channel, an adult channel, and a sports channel. There can also be regional channels, like e.g. children's channel north, or sports channel north. The algorithm for selecting the broadcast channel is based on the values of one or more tags in the additional information associated to the content. For instance in the case of video content: Sports channel north broadcasts videos that are categorized under sports and have the Geographic indication Northern. This sports channel also broadcasts videos which have indication "advertisement=yes", and geographic indication is Northern (optionally also sports, but not necessary). Association between video content and a tag may be accomplished in many different ways. For instance it may be possible that the tag is included in the video file (for instance an MPEG2 file). It may also be possible that the tag is included in another file than the file that includes the video. A tag can be included by another file that is uploaded together with the video file. Tags can for instance be of the following dimensions: category indication, advertisement, geographic indication (City, North of the country,....), and prefered Time for broadcast (night, weekend, evening, afternoon,...). A category indication can for instance be: music (for e.g. music bands), children, sports (for e.g. football or tennis clubs), adult, technology, news, and wildlife and animals.

The broadcast unit (14) provides the content to be distributed to a broadcast facility (16) if the broadcasting takes place through air. Viewers are able to view the content via a content receiving device (5). The content receiving device (5) can be any type of device that is able to receive content, such as a television set or a mobile handheld. It is also possible that the distribution of content takes place via a wired infrastructure, for instance via a second network (4). It may then be the case that at the user's end a residential gateway (not depicted in FIG. 1) is used to receive the content over a broadband access network. A set-top-box is then connected to the residential gateway. However, many different types of configurations may occur at the user's end. In addition, not only the principle of broadcasting is within the scope of this invention but also multi-cast, uni-cast and video-on-demand.

In order to prevent abuse, in an embodiment of the invention users must identify (username/password) before uploading content. Advertisements can be broadcasted on basis of payments done, just being a customer of a broadcast company, or positive video upload behavior (advertisements credits for sport clubs that produce a certain number of videos of their game).

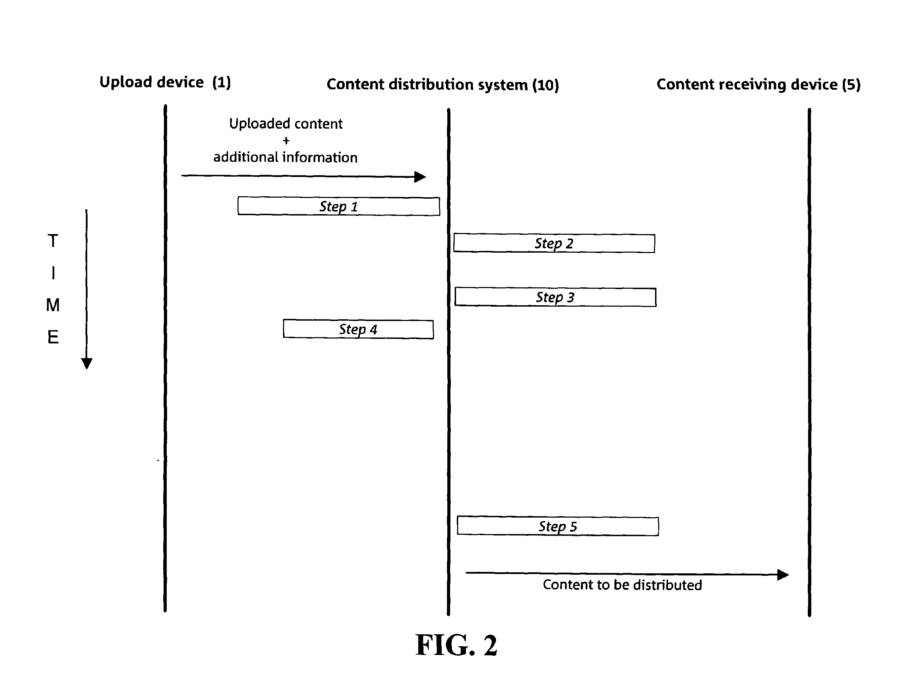

FIG. 2 contains a flowchart that illustrates a possible embodiment according the present invention. In this embodiment the upload device (3) is for instance connected to the content distribution system (10) via Internet. For instance, a user has digitally recorded video content and uploads this content via an Internet connection to the content distribution system (10) that is connected to the Internet. The distribution of content takes place in this embodiment via a broadcast infrastructurewhereby content can be viewed by users via several IP TV broadcast channels. In such a case content receiving devices (5) are for example connected to the content distribution system (10) via Internet. The user can select a channel out of a number of chanrels via which content is broadcasted, after which the content can be viewed that is broadcasted via the selected channel.

In this embodiment there is additional information added to the uploaded content. The additional information can for instance identify the type of content and the encoding type. After having received the uploaded content (Step 1) via the content receiving means (11), the additional information is analyzed (Step 2) by the control unit (15). It may for instance appear from this analysis that the encoding format of the uploaded content is MPEG2 and that the uploaded content is of the category 'wildlife'. The latter would indicate that this content is to be broadcasted via a channel that is suitable for this type of content (for instance a dedicated Wildlife channel) (Step 3). It can be the case that it not required to decode the uploaded content into another encoding format. This is for instance the case if both the uploaded content and the content to be broadcasted are in the MPEG2 format. If, however, there are differences between the encoding formats it is required to decode the uploaded content and to encode it into the appropriate encoding format. This decoding and encoding can be performed by the content encoding unit (12). It may also be possible that the content encoding unit (12) is able to convert between different bandwidth rates or between different encoding rates.

The control unit (15) may also be capable of determining at which moment in time the content to be broadcasted can be broadcasted. It may appear that via the appropriate channel already other content is being broadcasted. This would require storing the uploaded content in a content storage means (13) until the appropriate channel becomes available (Step 4). It is also possible that the content to be broadcasted can be broadcasted via the appropriate broadcast channel almost immediately (which is not assumed in this embodiment), so that storage in the content storage means is not required. When the appropriate broadcast channel becomes available (Step 5) the content to be distributed is distributed by the content distribution system (10) to the content receiving device (5). The uploaded content and the content to be distributed can differ in certain aspects. For instance, the content to be distributed is a subset of the uploaded content (e.g. the content to be distributed contains the first x minutes of the uploaded content).

## Claims

1. A content distribution system (10) for receiving content from an upload device (1) via a first communications network (3) and by means of a first communications protocol and, based on content received from the upload device (1), automatically distributing content to a content receiving device (5) via a second communications network (4) by means of a second communications protocol, the content distribution system (10) comprising a control unit (15), a content receiving unit (11) for receiving content, and a broadcast interface unit (14) for distributing content.

2. A content distribution system (10) according to claim 1, whereby the content received from the upload device (1) is video content.

3. A content distribution system (10) according to claim 1, whereby the content received from the upload device (1) is audio content.

4. A content distribution system (10) according to claim 1, 2 or 3, whereby the control unit (15) determines a property of the content received from the upload device (1).

5. A content distribution system (10) according to claim 4, whereby the distribution of content takes place according to said property.

6. A content distribution system (10) according to claim 5, whereby said property is the aspect ratio of video images comprised by the content received from the upload device (1).

7. A content distribution system (10) according to claim 1, 2 or 3, whereby the distribution of content takes place according to information that is associated to content received from the upload device (1).

8. A content distribution system (10) according to any of the preceding claims, whereby the content distribution system (10) comprises a content encoding unit (12) for the conversion between a format associated to the content received from the upload device (1) and a format associated to the content to be distributed to the content receiving device (5).

9. A content distribution system (10) according to any of the preceding claims, whereby the content distribution system (10) comprises a content storage means (13) for storing content.

10. A content distribution system (10) according to any of the preceding claims, whereby the distribution of content to the content receiving device (5) takes place via a broadcast infrastructure.

11. A content distribution system (10) according to claim 10, whereby the broadcasting takes place through air.

12. A content distribution system (10) according to claim 10, whereby the broadcasting takes place via a wired infrastructure.

13. A content distribution system (10) according to any of the preceding claims, whereby said first communications protocol is the same communications protocol as said second communications protocol.

14. A content distribution system (10) according to any of the preceding claims, whereby the control unit (15) determines, based on a property of the received content or on information associated to the received content, a distribution parameter.

15. A content distribution system (10) according to claim 14, whereby said distribution parameter is a selection parameter for selecting a broadcast channel.

16. A content distribution system (10) according to any of the preceding claims, whereby the control unit (15) assigns a priority parameter to content received from the uploaded device (1), which priority parameter is used to determine at which moment of time the content distribution system (10) distributes the content to be distributed.

17. A method for receiving content and automatically distributing content, the method comprising the steps of:
- receiving content from an upload device (1) via a first communications network (3) and by means of a first communications protocol; and
- distributing, based on the received content and according to the distribution parameter, content to a content receiving device (5) via a second communications network (4) and by means of a second communications protocol.

18. Method according to claim 17, whereby a distribution parameter is determined based on a property of the received content or on information associated to the received content.

19. Method according to claim 17 or 18, whereby the received content is encoded by a content encoding unit (12) before it is distributed.

20. Method according to claim 17, 18 or 19, whereby the received content is stored in a content storage means (13) before it is distributed.

21. Method according to claim 20, whereby the received content is decoded by the content encoding unit (12) before it is stored in the content storage means (13).

22. Method according to one of the claims 17-21, whereby the distribution takes place via a broadcast infrastructure.

23. Method according to claim 22, whereby said distribution parameter is a selection parameter for selecting a broadcast channel.
